# EUROPEAN PATENT SPECIFICATION

(11) **EP 0 987 960 B1**
(45) Date of publication and mention of the grant of the patent: **28.12.2005**
(21) Application number: 98924455.3
(22) Date of filing: 27.05.1998
(51) Int. Cl.: A23L 1/22

(54) **METHOD OF CO-CRYSTALLIZING A FOOD ADDITIVE**
METHODE ZUR COKRISTALLISATION EINES LEBENSMITTELZUSATZSTOFFES
PROCEDE DE CO-CRISTALLISATION D'UN ADDITIF ALIMENTAIRE

(30) Priority: 30.05.1997 GB 9711231
(43) Date of publication of application: 29.03.2000
(73) Proprietor: KEMIN INDUSTRIES, INC., Des Moines, IA 50301-0070 (US)
(72) Inventor: SAS, Benedikt, B-2360 Oud-Turnhout (BE); RYCKAERT, Pedro, B-2200 Westerlo (BE); ADAMS, Clifford, B-2600 Berchem (BE)
(74) Representative: Greaves, Carol Pauline
(86) International application number: PCT/GB1998/001549
(87) International publication number: WO 1998/053706

(56) References cited:
- EP-A- 0 052 919
- US-A- 4 379 177
- US-A- 5 576 042

## Description

The present invention relates to the preparation of food additives, in particular to the preparation of flavours for incorporation into foodstuffs, as well as to the additives and foodstuffs, particularly animal feeds, obtained thereby.

Many foodstuffs for both human and animal consumption are processed for the incorporation of additives. With respect to animal feeds, a clear relationship between food flavour and feed intake has been recognised.

Hitherto, flavour compounds have been incorporated into foodstuffs, particularly animal feeds, by addition to carrier particles, in particular, salt particles. The flavour compounds in liquid or powder form are distributed onto fine salt particles which may then be added to foodstuffs. The particle size of the salt particles used as a carrier is necessarily small in order to ensure that the surface area of the carrier onto which the flavour may be adsorbed, is as large as possible so as to optimise the amount of flavour to the amount of carrier. The problem here is that the final product is dusty, being only of a similar size to the fine salt particles utilised as the carrier. Significant quantities of dust in the atmosphere is undesirable, particularly in industrial environments since small particles present in the air, may be breathed in by workers in the area, and may adversely affect health.

Furthermore, being merely coated on the surface of the carrier particles, the flavour compounds may be relatively easily and rapidly lost, for example, by abrasion and/or vapourisation leading to a reduced shelf life or persistence of flavour of both the additive and the finished product (foodstuff).

EP-A-0052919 discloses a crystallized sugar product containing a food ingredient, said food ingredient in at least one example being dry milk.

The applicants have found an improved method of formulating food additives, which produces a more easily handled and robust product.

According to a first aspect of the present invention, there is provided a method of preparing a food additive, said method comprising
(i) mixing crystalline carrier particles with an additive compound;
(ii) applying to the thus produced mixture a solution of a crystalline solid under conditions such that the said carrier particles are partially dissolved; and
(iii) allowing the mixture to cocrystallize and to agglomerate so as to form particles of increased average size as compared to the said carrier particles.

During the cocrystallization step (iii), the particles grow and/or coalesce. Thus the average particle size of the product is generally larger than the particle size of the carrier molecules themselves. Such particles will present a reduced dust hazard as compared to the carrier particles themselves.

Furthermore, during the cocrystallization in step (iii), the additive becomes incorporated into pores in the resultant crystal structure. The crystals are, by and large, coated with the crystalline solid, so that the additive is entrapped within the larger particles. This means that the additive is not easily lost or degraded by other components in the foodstuff. Therefore, the shelf life of the food additive, as well as the feed or food product incorporating the additive, is also increased.

Suitable carrier particles are non-toxic crystalline solids such as salt or sugar crystals. In particular alkali metal halides in particular chlorides such as sodium or potassium chlorides are preferred carrier particles. Such compounds are economical and readily available and are generally permitted in animal feeds.

The carrier particles may comprise a mixture of the carriers and also dessicating or drying agents as 'co-carriers'. These agents include edible silica and silicates, for example Sipernate® 22 available from Degussa. These agents can absorb up to 2.5 times their own weight of moisture. Inclusion of such agents may be preferable where the additive compound is in the form of a liquid (either a liquid per se or a solution such as an aqueous solution), likely to form a 'sticky' product when combined with the carrier. The amount of such a co-carrier required will depend upon the amount of additive compound as well as the precise nature of the additive compound and the carrier. In general, the weight ratio of co-carrier to liquid additive compound would be in the region of about 1:2 so that if 20 g of liquid additive were to be used, the carrier would include 10g of co-carrier.

Preferably the carrier particles have an average particle size of from 50-300 microns, and are generally in the region of about 200 microns.

Examples of food additives which may be incorporated in this way include flavours, vitamins in particular vitamin E or vitamin A or other diet supplements, preservatives, colorants, etc. The additives are suitably in the form of liquids or solids at room temperature. The method is particularly suitable for the inclusion of flavours for example natural flavours such as vanilla or flavour composites containing such as Butter Vanil Arome Dry® (available from Kemin Europa N.V.), as well as artificial flavours such as pyrazines, esters and ketone flavours as would be understood in the art.

The ratio of the food additive to carrier particle which are mixed together in step (i) depends upon the precise nature of the carrier particles and the additive compounds employed. However, a weight ratio of carrier (including co-carrier where present) to additive of from 1:1 to 99:1, suitably about 4:1 will generally be acceptable.

The solution utilised in step (ii) of the process of the invention is suitably an aqueous solution of a material which forms a non-toxic crystalline solid at room temperature. The solid preferably has a palatable flavour of its own, so that it may enhance the flavour of the additive. Examples of such compounds are sugars, such as glucose, maltose or fructose or other sweeteners. Such compounds are readily available and low in cost which is particularly important for animal feed applications.

The solution of crystalline solid used in step (ii) is suitably a concentrated aqueous solution, containing for example of from 30-65wt%, preferably about 40wt% crystalline solid. This is particularly true for sugar solutions where concentrations in excess of 65wt% are regarded as being syrups.

The solution must be applied in such a way that it results in only partial dissolution of the carrier particles. The conditions under which this will happen depends upon the precise nature of the carrier particles as well as the nature of the solution of crystalline solid. A preferred application method is by spraying the solution onto the particles, and thus it is preferable that the solution is able to pass through a nozzle of a spray applicator, most preferably a fine nozzle of from 0.46mm to 0.97mm in size. A flow rate of from 0.28 1/min to 0.84 1/minute, suitably at about 0.56 1/minute may be utilised.

When applied in this way, the spray droplets of the water/sugar solution wet the contact surface of the salt containing the additive, such as flavour, components. As a result, co-crystallisation of the sugar and the outer layer of the salt occurs, together with coating of the contact area with the liquid sugar solution. The additive, such as the flavour, becomes stably incorporated into the particles thus formed.

The solution may optionally include other active components such as flavour enhancers for example maltol or heliotropine, artificial sweeteners such as saccharine, or fixatives.

Conditions under which the solution of crystalline solid is applied in step (ii) will vary depending upon the precise nature of the carrier molecules, the additive, the crystalline solid itself as well as the process equipment employed. However temperatures of from 10°C to 50°C, suitably at about 25°C may be used.

The amount of solution applied to the carrier/additive mixture to achieve the desired product will once again depend upon the precise nature of the components and the process equipment. However, in general, the amount of solution applied will be of the order of from 5 to 25wt% of the amount of the additive in the mixture, suitably at about 10% by weight.

The cocrystallisation and agglomeration of step (iii) of the process of the invention may occur or begin to occur during the spraying step (ii) depending upon the particular conditions employed. After spraying, the sprayed product is subjected to conditions which would allow co-crystallisation and aglomeration of the components to occur or to continue, as necessary. This may include maintaining the product at moderate temperatures for example of from 15 ° to 50 °C, optionally in a moving air stream for example as may be found in a fluidised dryer.

Once prepared in this way, the product is generally quite dry but optionally may be subjected to extra drying. This can be accomplished using a fluid bed dryer with an air temperature of from about 60 to 150°C, suitably at about 100°C and a product temperature of about 25°C. Drying times may be relatively short, for example from 2 to 20 minutes.

The resultant particles generally have a particle size in excess of 300 microns, for example about 500 microns.

According a second aspect of the current invention there is provided a particulate food additive according to claim 10.

Such food additive particles can be admixed with foodstuffs and in particular animal feeds in a conventional manner. The size of the particles means that the handling process can be carried out more easily and with less dust than hitherto.

In yet a further aspect, there is provided a foodstuff comprising a particulate food additive as described above.

Another aspect of the invention provides a method for supplementing a foodstuff, said method comprising mixing said foodstuff with a particulate food additive in the form of a particulate material as described above.

The invention will now be particularly described by way of example.

### Example 1

Butter Vanille Arome Dry flavour ®(250g) from Kemin Europa N.V. contains vanilla on a carrier comprising sodium chloride (74wt%) with a silicate as a co-carrier (10wt%). This product has an average particle size of 0.2mm.

A sugar solution (300g sugar in 750ml water) was prepared. 26 g of the sugar solution was applied to the Butter Vanille Arome Dry® by spraying.

The resultant crystalline product was transferred to a fluid bed dryer and dried with an air temperature of 100°C and a product temperature of 30°C for five minutes.

The resultant product was in the form of uniform rounded granules having an average particle size of 0.5mm.

## Claims

1. A method of preparing a food additive, said method comprising
(i) mixing crystalline carrier particles with an additive compound;
(ii) applying to the thus produced mixture a solution of a crystalline solid under conditions such that the said carrier particles are partially dissolved; and
(iii) allowing the mixture to cocrystallize and agglomerate so as to form particles of increased average size as compared to the said carrier particles.

2. A method according to claim 1 wherein the carrier particles comprise an alkali metal halide salt.

3. A method according to claim 2 wherein the alkali metal halide salt comprises sodium or potassium chloride.

4. A method according to any of claims 1 to 3 wherein the food additive comprises a flavour.

5. A method according to any one of the preceding claims wherein the said solution of crystalline solid comprises a concentrated sugar solution.

6. A method according to any one of the preceding claims wherein the carrier particles and additive compound are mixed in a by weight ratio of between 1:1 and 99:1.

7. A method according to any one of the preceding claims wherein the carrier particles and additive compound are mixed in a by weight ratio of 4:1.

8. A method according to any one of the preceding claims wherein the solution of crystalline solid is applied in an amount of between 5 to 25wt% of the amount of additive.

9. A method according to any one of the preceding claims wherein the solution of crystalline solid is applied in an amount of about 10wt% of the amount of additive.

10. A particulate food additive comprising;
crystalline carrier particles; and
a food additive;
wherein the carrier particles have a layer of co-crystallized sugar and non-toxic salt.

11. A particulate food additive according to claim 10 wherein the carrier particles comprise sugar or a non-toxic soluble salt.

12. A particulate food additive according to claim 10 or 11 wherein the food additive is incorporated into the cocrystallised layer.

13. A foodstuff comprising a particulate food additive as claimed in claim 10, 11 or 12.

14. A method of supplementing a foodstuff, said method comprising mixing said foodstuff with a particulate food additive as claimed in claim 10, 11 or 12.

## Patentansprüche

1. Verfahren zur Herstellung eines Lebensmittelzusatzstoffes, wobei das Verfahren aufweist
(i) das Mischen von kristallinen Trägerpartikeln mit einer Zusatzstoffverbindung;
(ii) das Hinzufügen zu der auf diese Art und Weise hergestellten Mischung einer Lösung eines kristallinen Feststoffes unter solchen Bedingungen, daß die Trägerpartikel teilweise aufgelöst werden; und
(iii) es der Mischung zu erlauben, zu co-kristallisieren und zu agglomerieren, um auf diese Weise Partikel vergrößerter Durchschnittsgröße im Vergleich zu den Trägerpartikeln zu bilden.

2. Verfahren nach Anspruch 1, wobei die Trägerpartikel ein Alkalimetallhalogenidsalz aufweisen.

3. Verfahren nach Anspruch 2, wobei das Alkalimetallhalogenidsalz Natrium- oder Kaliumchlorid aufweist.

4. Verfahren nach einem der Ansprüche 1 bis 3, wobei der Lebensmittelzusatzstoff ein Aroma enthält.

5. Verfahren nach einem der vorhergehenden Ansprüche, wobei die Lösung des kristallinen Feststoffes eine konzentrierte Zuckerlösung enthält.

6. Verfahren nach einem der vorhergehenden Ansprüche, wobei die Trägerpartikel und die Zusatzstoffverbindung in einem Gewichtsverhältnis zwischen 1:1 und 99:1 gemischt werden.

7. Verfahren nach einem der vorhergehenden Ansprüche, wobei die Trägerpartikel und die Zusatzstoffverbindung in einem Gewichtsverhältnis von 4:1 gemischt werden.

8. Verfahren nach einem der vorhergehenden Ansprüche, wobei die Lösung des kristallinen Feststoffes in einer Menge zwischen 5 bis 25 Gewichtsprozent der Menge des Zusatzstoffes dazugegeben wird.

9. Verfahren nach einem der vorhergehenden Ansprüche, wobei die Lösung des kristallinen Feststoffes in einer Menge von ungefähr 10 Gewichtsprozent der Menge des Zusatzstoffes dazugegeben wird.

10. Partikulärer Lebensmittelzusatzstoff, aufweisend;
kristalline Trägerpartikel; und
einen Lebensmittelzusatzstoff;
wobei die Trägerpartikel eine Schicht von co-kristallisiertem Zucker und nicht-toxischem Salz aufweisen.

11. Partikulärer Lebensmittelzusatzstoff nach Anspruch 10, wobei die Trägerpartikel Zucker oder ein nicht-toxisches lösliches Salz aufweisen.

12. Partikulärer Lebensmittelzusatzstoff nach Anspruch 10 oder 11, wobei der Lebensmittelzusatzstoff in der co-kristallisierten Schicht aufgenommen ist.

13. Lebensmittel, aufweisend einen partikulären Lebensmittelzusatzstoff wie in Anspruch 10, 11 oder 12 beansprucht.

14. Verfahren zum Ergänzen eines Lebensmittels, wobei das Verfahren das Mischen des Lebensmittels mit einem partikulären Lebensmittelzusatzstoff, wie in Anspruch 10, 11 oder 12 beansprucht, enthält.

## Revendications

1. Procédé de préparation d'un additif alimentaire, procédé dans lequel
(i) on mélange des particules cristallines de support à un composé servant d'additif ;
(ii) on applique au mélange ainsi préparé une solution d'un solide cristallin dans des conditions telles que les particules du support sont dissoutes en partie ; et
(iii) on laisse le mélange cocristalliser et s'agglomérer de manière à former des particules de dimensions moyennes, plus grandes que celles des particules du support.

2. Procédé suivant la revendication 1, dans lequel les particules du support comprennent une halogénure de métal alcalin.

3. Procédé suivant la revendication 2, dans lequel l'halogénure de métal alcalin comprend du chlorure de sodium ou du chlorure de potassium.

4. Procédé suivant l'une quelconque des revendications 1 à 3, dans lequel l'additif alimentaire comprend un arôme.

5. Procédé suivant l'une des revendications précédentes, dans lequel la solution de solide cristallin comprend une solution concentrée de sucre.

6. Procédé suivant l'une des revendications précédentes, dans lequel les particules du support et le composé servant d'additif sont mélangés en un rapport en poids compris entre 1:1 et 99:1.

7. Procédé suivant l'une des revendications précédentes, dans lequel les particules du support et le composé servant d'additif sont mélangés en un rapport en poids de 4:1.

8. Procédé suivant l'une des revendications précédentes, dans lequel on applique la solution de solide cristallin en une quantité représentant de 5 à 25 % en poids de la quantité de l'additif.

9. Procédé suivant l'une des revendications précédentes, dans lequel on applique la solution de solide cristallin en une quantité représentant 10 % en poids de la quantité de l'additif.

10. Additif alimentaire en particules comprenant :
des particules cristallines de support ; et
un additif alimentaire ;
les particules de support ayant une couche de sucre cocristallisée et d'un sel non toxique.

11. Additif alimentaire en particules suivant la revendication 10, dans lequel les particules de support comprennent du sucre ou un sel soluble non toxique.

12. Additif alimentaire en particules suivant la revendication 10 ou 11, dans lequel l'additif alimentaire est incorporé dans la couche cocristallisée.

13. Aliment comprenant un additif alimentaire en particules tel que revendiqué à la revendication 10, 11 ou 12.

14. Procédé pour supplémenter un aliment, le procédé dans lequel on mélange l'aliment à un additif alimentaire en particules tel que revendiqué à la revendication 10, 11 ou 12.
